# EUROPEAN PATENT APPLICATION

(11) **EP 2 541 003 A1**
(43) Date of publication of application: **02.01.2013**
(21) Application number: 11747260.5
(22) Date of filing: 18.02.2011
(51) Int. Cl.: F01M 1/06, F02F 7/00, F16C 35/02, F16N 7/38

(54) **MAIN BEARING OF INTERNAL COMBUSION ENGINE**

(30) Priority: 25.02.2010 JP 2010041087
(71) Applicant: Mitsubishi Heavy Industries, Ltd., Tokyo 108-8215 (JP)
(72) Inventor: IMANAKA, Katsumi, Tokyo 108-8215 (JP); KUNIHIRO, Nobuyuki, Tokyo 108-8215 (JP)
(74) Representative: HOFFMANN EITLE
(86) International application number: PCT/JP2011/053501
(87) International publication number: WO 2011/105296

(57) **Abstract**

Bending of a lubricant branch pipe can be reduced as much as possible, the pipe length of the lubricant branch pipe can be reduced as much as possible, and pressure loss of the lubricant that flows in the lubricant branch pipe can be reduced. A central axis of a first oil channel (15), which passes through a main-bearing cap (9) in a plate-thickness direction thereof, and a central axis of a second oil channel (16), which passes through a base-plate saddle (12) in a plate-thickness direction thereof, intersect at 0 degree to 45 degrees; a central axis at one end of a lubricant branch pipe (20), which is connected to an inlet portion of the second oil channel (16), and a central axis of the lubricant branch pipe (20) excluding the one end also intersect at 0 degree to 45 degrees; and the lubricant branch pipe (20), excluding one end thereof, extends in a straight line in the widthwise direction of the base plate.

## Description

### {Technical Field}

The present invention relates to a main bearing that forms, for example, a large diesel engine for a ship or the like.

### {Background Art}

As a main bearing that forms a large diesel engine for a ship or the like, for example, the one disclosed in Fig. 1 in Patent Literature 1 has been known.

### {Citation List}

### {Patent Literature}

{PTL 1} Publication of Japanese Patent No. 2878128 {Summary of Invention}

### {Technical Problem}

However, a lubricant branch pipe that supplies lubricant to a main bearing 3 disclosed in Fig. 1 in Patent Literature 1, described above, needs to be bent at a right angle above a main bearing cap 4 and it also needs to be disposed so as to extend along a center partitioning plate that partitions cylinders so that it does not interfere with a crank arm of a crank shaft disposed adjacent thereto. Because of this, there is a problem in that the lubricant branch pipe includes many bent portions and the pipe length (pipe pathway length) of the lubricant branch pipe is increased, which increases pressure loss of lubricant that flows in the lubricant branch pipe. There is also a problem in that the manufacturing cost of the internal combustion engine is increased due to an increased pipe length of the lubricant branch pipe.

The present invention has been conceived in light of the above-described circumstances, and an object thereof is to provide a main bearing for an internal combustion engine with which bending in a lubricant branch pipe can be reduced as much as possible, pipe length of the lubricant branch pipe can be reduced as much as possible, and pressure loss of lubricant that flows in the lubricant branch pipe can be reduced.

### {Solution to Problem}

In order to solve the above-described problems, the present invention employs the following solutions.
A main bearing of an internal combustion engine according to a first aspect of the present invention is a main bearing for an internal combustion engine including a base-plate saddle provided at a center portion of a base plate in a widthwise direction, extending in a horizontal direction perpendicular to a longitudinal direction of the base plate such that a plate thickness thereof increases in the longitudinal direction of the base plate; a main-bearing bottom metal member that is mounted at a bottom-portion inner circumferential surface of the base-plate saddle and that supports a bottom half of a bearing surface of a crank shaft; a main-bearing cap disposed so as to cover the bottom portion of the base-plate saddle from above; and a main-bearing top metal member that is mounted at an inner circumferential surface of the main-bearing cap and that supports a top half of the bearing surface, in which a first oil channel that passes through the main-bearing cap in a plate-thickness direction is provided in a straight line in a widthwise direction of the base plate; a second oil channel that is communicated with this first oil channel and that also passes through the base-plate saddle in the plate-thickness direction is provided in a straight line in the widthwise direction of the base plate; and an inlet portion of this second oil channel is connected to one end of a lubricant branch pipe that supplies lubricant to an oil groove provided in the main-bearing top metal member via the first oil channel and the second oil channel; wherein a central axis of the first oil channel and a central axis of the second oil channel intersect at 0 degree to 45 degrees; a central axis at one end of the lubricant branch pipe and a central axis of the lubricant branch pipe excluding the one end intersect at 0 degree to 45 degrees; and the lubricant branch pipe, excluding the one end thereof, extends in a straight line in the widthwise direction of the base plate.

With the main bearing for an internal combustion engine according to the first aspect of the present invention, lubricant that has flowed into the lubricant branch pipe from the lubricant main pipe reaches the through-hole in the main-bearing top metal member merely by slightly turning (by about 0 to 45 degrees) when passing through one end of the lubricant branch pipe and by slightly turning (by about 0 to 45 degrees) when flowing into the first oil channel from the second oil channel so that it is supplied, via the oil groove, between a bearing surface of the crank shaft and the main-bearing top metal member as well as the main-bearing bottom metal member.
By doing so, bending of the lubricant branch pipe can be reduced as much as possible, the pipe length of the lubricant branch pipe can be reduced as much as possible, and pressure loss of the lubricant that flows in the lubricant branch pipe can be reduced.

In the above-described main bearing for an internal combustion engine according to the first aspect of the present invention, it is more preferable that the lubricant branch pipe be arranged so as not to enter a plane formed by a trajectory of a side surface of a crank arm of the crank shaft disposed adjacent thereto.

With such a main bearing for an internal combustion engine, because the lubricant branch pipe is provided at a location that does not interfere with the crank arm of the crank shaft disposed adjacent thereto, it is possible to cope with an increased size of the crank arm associated with an increased size of (adoption of longer stroke in) an internal combustion engine.

In the above-described main bearing of an internal combustion engine according to the first aspect of the present invention, it is more preferable that a circumferential groove that receives a sealing material, which is arranged so as to surround an inlet of the first oil channel, be provided at one side surface of the main-bearing cap.

With such a main bearing for an internal combustion engine, because lubricant that would flow out (leak) from between one side surface of the main-bearing cap and an inner-side surface of an upright portion of the base-plate saddle, which faces one side surface of the main-bearing cap, is confined (sealed) by the sealing material, it is possible to cope with, for example, a case in which there is a slight gap (of about 0.01 mm to 0.82 mm, for example) between one side surface of the main-bearing cap and the inner-side surface of the upright portion of the base-plate saddle.

An internal combustion engine according to a second aspect of the present invention is equipped with any one of the main bearings for an internal combustion engine described above.

The internal combustion engine according to the second aspect of the present invention is equipped with a main bearing for an internal combustion engine with which bending in a lubricant branch pipe can be reduced as much as possible, the pipe length of the lubricant branch pipe can be reduced as much as possible, and pressure loss of lubricant that flows in the lubricant branch pipe can be reduced; accordingly, it is possible to supply lubricant having sufficient pressure to the main bearing that supports a crank shaft, and thus, the reliability of the internal combustion engine can be enhanced.

### {Advantageous Effects of Invention}

A main bearing of an internal combustion engine according to the present invention affords an advantage in that bending in a lubricant branch pipe can be reduced as much as possible, the pipe length of the lubricant branch pipe can be reduced as much as possible, and pressure loss of lubricant that flows in the lubricant branch pipe can be reduced.

### {Brief Description of Drawings}

Fig. 1 is a longitudinal sectional view showing an example structure of a large diesel engine for a ship or the like equipped with a main bearing for an internal combustion engine according to the present invention.
Fig. 2 is a perspective view of the main bearing for an internal combustion engine according to the present invention.
Fig. 3 is a diagram in which the main bearing for an internal combustion engine according to a first embodiment of the present invention is viewed from above, which is a lateral sectional view showing main portions thereof in enlargement.
Fig. 4 is a diagram in which the main bearing for an internal combustion engine according to a second embodiment of the present invention is viewed from above, which is a lateral sectional view showing main portions thereof in enlargement.

### {Description of Embodiments}

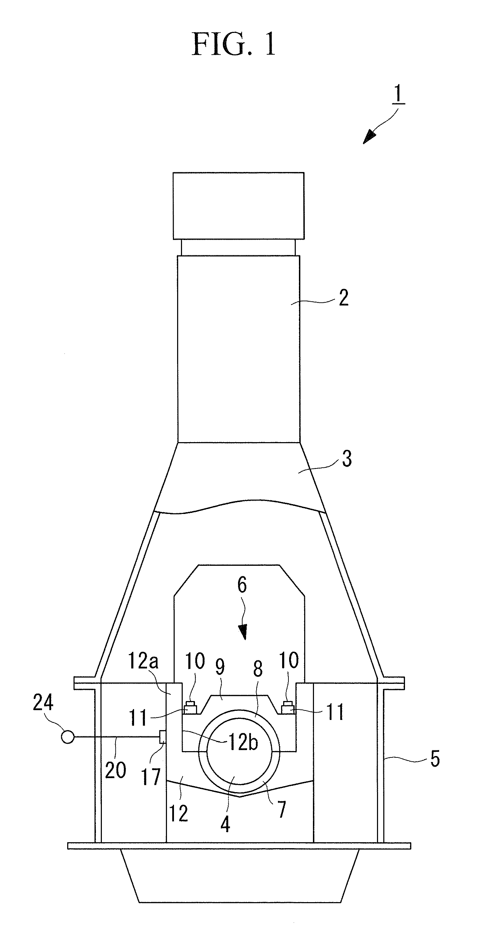

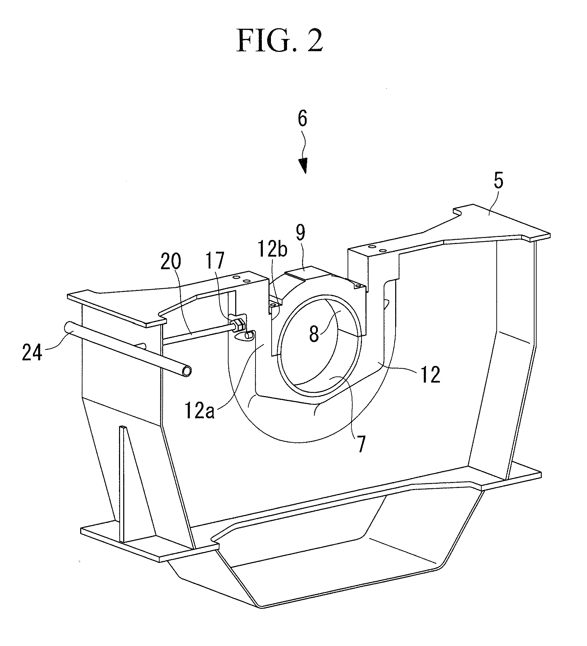

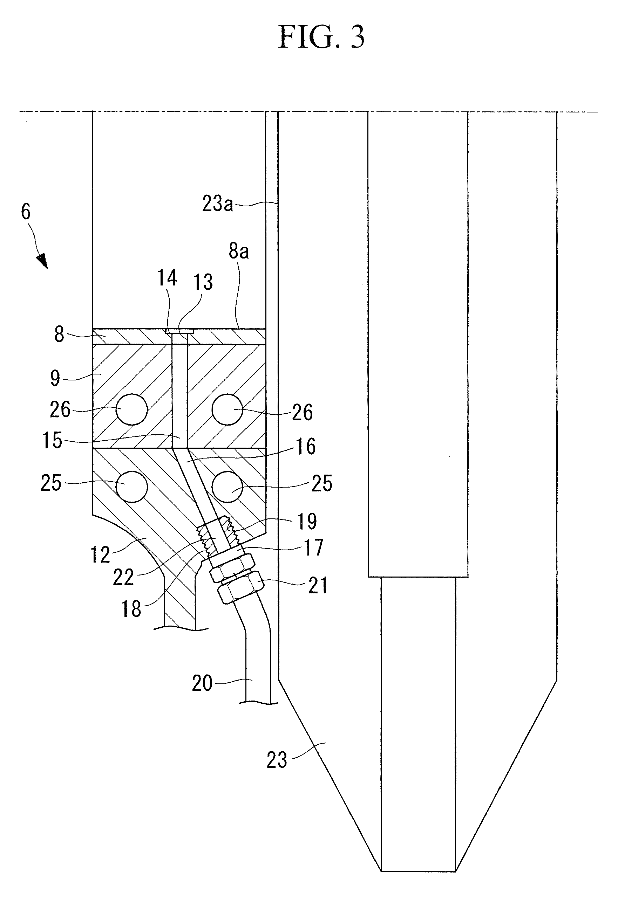

A main bearing for an internal combustion engine according to a first embodiment of the present invention will be described below with reference to Figs. 1 to 3. Fig. 1 is a longitudinal sectional view showing an example structure of a large diesel engine for a ship or the like equipped with the main bearing for an internal combustion engine according to the present invention; Fig. 2 is a perspective view of the main bearing for an internal combustion engine according to the present invention; and Fig. 3 is a diagram in which the main bearing for an internal combustion engine according to this embodiment is viewed from above, which is a lateral sectional view showing main portions thereof in enlargement.

As shown in Fig. 1, a large diesel engine (crosshead diesel engine, i.e. internal combustion engine) 1 is roughly divided into three portions. A first portion is a cylinder jacket 2 that accommodates cylinders (not shown), pistons (not shown), and so forth; a second portion is a frame 3 that accommodates a connecting rod (not shown) that transmits force from pistons, due to an explosion, to a crank shaft (not shown) and so forth; and a third portion is a base plate 5 that accommodates a crank shaft 4 that conveys the obtained motive power to a propeller (not shown) and so forth. The base plate 5, frame 3, and cylinder jacket 2 are sequentially stacked and assembled by being fastened with tie-bolts (not shown) that pass through the entire engine in a vertical direction from a top surface of the cylinder jacket 2 to a bottom surface of the base plate 5.

The base plate 5 is provided with a plurality of (for example, nine in the case of a seven-cylinder engine) main bearings 6 that support the crank shaft 4 along a longitudinal direction of the base plate 5 (axial direction of the crank shaft 4). Each of the main bearings 6 is provided with a main-bearing bottom metal member 7, a main-bearing top metal member 8, a main-bearing cap (main-bearing holding metal unit) 9, main-bearing cap bolts (main-bearing-holding-metal-unit attachment bolts) 10, and attachment nuts 11.

As shown in Fig. 1 or 2, the main-bearing bottom metal member 7 is mounted at a bottom-portion inner circumferential surface of a base-plate saddle (thick-plate portion) 12 provided at a center portion of the base plate 5 in the widthwise direction, extending in a horizontal direction perpendicular to the longitudinal direction of the base plate 5, such that plate thickness thereof increases in the longitudinal direction. On the other hand, the main-bearing top metal member 8 is mounted at an inner circumferential surface of the main-bearing cap 9 that is secured to the base-plate saddle 12, so as to cover the bottom portion of the base-plate saddle 12 from above, with a plurality of (four in this embodiment) main-bearing cap bolts 10 that are vertically arranged (erected) on the base-plate saddle 12 and the attachment nuts 11 that have female screw portions that are threaded to male screw portions provided on the main-bearing cap bolts 10.

As shown in Fig. 3, an inner circumferential surface 8a of the main-bearing top metal member 8 is provided with one oil groove 14 that communicates with one through-hole 13 having a circular shape in sectional view, which passes through the main-bearing top metal member 8 in the plate-thickness direction. The oil groove 14 is provided at a center portion of the main-bearing top metal member 8 in the widthwise direction (direction perpendicular to the plate-thickness direction of the main-bearing top metal member 8) so as to extend along the circumferential direction. An opening (inlet) positioned at one end of the through-hole 13 is formed so as to be aligned with an opening (outlet) positioned at one end of an oil channel 15, described later.

The main-bearing cap 9 is provided with, along the widthwise direction of the base plate 5, the single (first) oil channel 15 having a circular shape in sectional view that communicates with the through-hole 13 and the oil groove 14 by passing through the main-bearing cap 9 in the plate-thickness direction. The opening (outlet) positioned at one end of the oil channel 15 is formed so as to be aligned with the opening (inlet) positioned at one end of the through-hole 13, and an opening (inlet) positioned at the other end of the oil channel 15 is formed so as to be aligned with an opening (outlet) positioned at one end of an oil channel 16, described later.

The base-plate saddle 12 is provided with, along the widthwise direction of the base plate 5, the single (second) oil channel 16 having a circular shape in sectional view that communicates with the oil channel 15 by passing through the base-plate saddle 12 in the plate-thickness direction. The opening (outlet) positioned at one end of the oil channel 16 is formed so as to be aligned with the opening (inlet) positioned at the other end of the oil channel 15, and female screw portions 19 that are threaded to male screw portions 18 formed at an outer circumferential surface of one end (outlet portion) of a nipple (screw-fitting joint) 17 are formed at the other end (inlet portion) of the oil channel 16.

An outer circumferential surface of the other end (inlet portion) of the nipple 17 is provided with a male screw portion (not shown) that is threaded to a female screw portion (not shown) of a nut 21 provided at one end (outlet portion) of a lubricant branch pipe 20. Center portion of the nipple 17 is provided with a (third) oil channel 22 having (substantially) equal flow-channel sectional area as the oil channel 16 along the longitudinal direction (axial direction) of the nipple 17.

One end of the lubricant branch pipe 20 connected to the other end of the nipple 17 is bent in the vicinity of a portion connecting with the nipple 17 so as not to interfere with the crank arm 23 of the crank shaft 4 disposed adjacent thereto, that is, so as not to enter a plane formed by the trajectory of an end surface (side surface) 23a of the crank arm 23 positioned on the nipple 17 side, and a portion from this bent portion to the other end (inlet portion) connected to the lubricant main pipe 24 (see Fig. 1 or 2) is a pipe that extends outward along the widthwise direction of the base plate 5.
The lubricant main pipe 24 is a pipe that extends on one side of the base plate 5 along the longitudinal direction of the base plate 5 such that lubricant is sent with a predetermined pressure (pumped) to the lubricant main pipe 24 from an unillustrated lubricant supply source (for example, a lubricant tank disposed in an engine room of a ship).
Reference signs 25 in Fig. 3 indicate holes that the above-described tie-bolts pass through, and reference signs 26 in Fig. 3 indicate holes that the above-described main-bearing cap bolts 10 pass through.

With the main bearing 6 for an internal combustion engine according to this embodiment, the lubricant that has flowed into the lubricant branch pipe 20 from the lubricant main pipe 24 reaches the through-hole 13 in the main-bearing top metal member 8 merely by slightly turning (by about 0 to 45 degrees) when passing through one end of the lubricant branch pipe 20 and by slightly turning (by about 0 to 45 degrees) when flowing into the oil channel 15 from oil channel 16 so that it is supplied, via the oil groove 14, between a bearing surface (not shown) of the crank shaft 4 and the main-bearing top metal member 8 as well as the main-bearing bottom metal member 7.
By doing so, bending of the lubricant branch pipe 20 can be reduced as much as possible, the pipe length of the lubricant branch pipe 20 can be reduced as much as as possible, and pressure loss of the lubricant that flows in the lubricant branch pipe 20 can be reduced.

With the main bearing 6 for an internal combustion engine according to this embodiment, because the lubricant branch pipe 20 is provided at a location that does not interfere with the crank arm 23 of the crank shaft 4 disposed adjacent thereto, it is possible to cope with an increased size of the crank arm 23 associated with an increased size of (adoption of longer stroke in) the internal combustion engine.

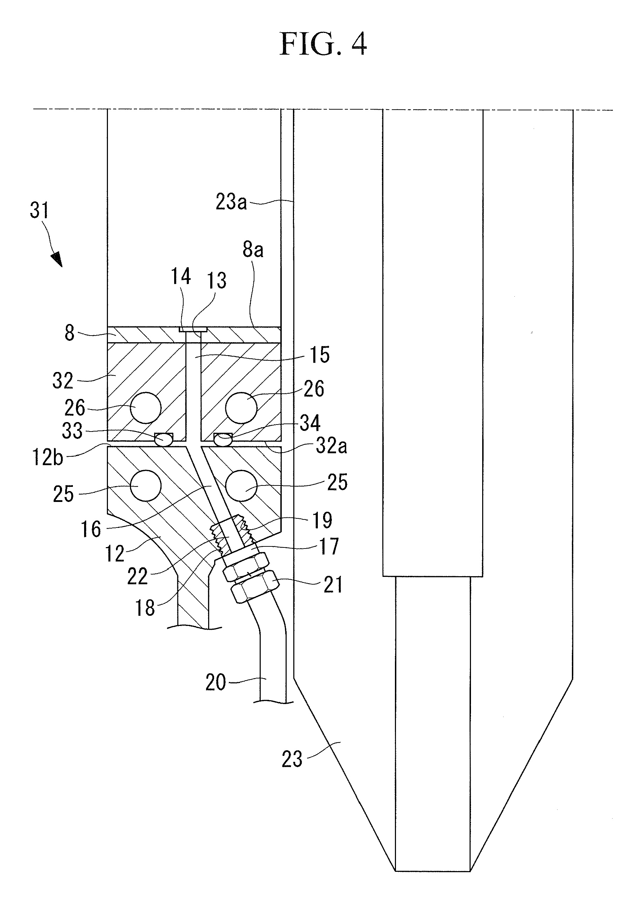

A main bearing for an internal combustion engine according to a second embodiment of the present invention will now be described with reference to Fig. 4. Fig. 4 is a diagram in which the main bearing for an internal combustion engine according to this embodiment is viewed from above, which is a lateral sectional view showing main portions in enlargement.
A main bearing 31 for an internal combustion engine according to this embodiment differs from that of the first embodiment described above in that a main-bearing cap 32 is provided instead of the main-bearing cap 9. Because other constituent elements are the same as those of the first embodiment described above, descriptions of these constituent elements will be omitted herein.
The same reference signs are assigned to members that are the same as those of the first embodiment described above.

As shown in Fig. 4, one side surface (a surface that faces an inner-side surface 12b of an upright portion 12a (see Fig. 1 or 2) of the base-plate saddle 12 to which the nipple 17 is attached) 32a of the main-bearing cap 32 is provided with a circumferential groove (depressed portion) 34 that receives a sealing material 33 which is arranged so as to surround the inlet of the oil channel 15. The circumferential groove 34 is formed so that depth (length in the plate-thickness direction of the base-plate saddle 12) thereof is smaller than the thickness (height) of the sealing material 33 and width (length in the widthwise direction of the base-plate saddle 12) thereof is the same as the thickness (width) of the sealing material 33 or slightly larger than the thickness of the sealing material 33.

With the main bearing 31 for an internal combustion engine according to this embodiment, because lubricant that would flow out (leak) from between the inner-side surface 12b of the upright portion 12a of the base-plate saddle 12 and one side surface 32a of the main-bearing cap 32 is confined (sealed) by the sealing material 33, it is possible to cope with, for example, a case in which there is a slight gap (of, for example, about 0.01 mm to 0.82 mm) between the inner-side surface 12b of the upright portion 12a of the base-plate saddle 12 and one side surface 32a of the main-bearing cap 32.
Because the other operational advantages are the same as those of the first embodiment described above, descriptions thereof will be omitted herein.

With a large diesel engine 1 according to the present invention, because it is equipped with the main bearing 6 or 31 for an internal combustion engine, with which bending of the lubricant branch pipe 20 can be reduced as much as possible, the pipe length of the lubricant branch pipe 20 can be reduced as much as possible, and pressure loss of the lubricant that flows in the lubricant branch pipe 20 can be reduced, lubricant having sufficient pressure can be supplied to the main bearing 6 or 31 that supports the crank shaft 4, and thus, the reliability of the large diesel engine 1 can be enhanced.

The present invention is not limited to the embodiments described above, and various alterations and modifications are possible within a range that does not depart from the spirit of the present invention.

### {Reference Signs List}

- 1: large diesel engine (internal combustion engine)
- 4: crank shaft
- 5: base plate
- 6: main bearing
- 7: main-bearing bottom metal member
- 8: main-bearing top metal member
- 9: main-bearing cap
- 12: base-plate saddle
- 14: oil groove
- 15: (first) oil channel
- 16: (second) oil channel
- 20: lubricant branch pipe
- 23: crank arm
- 23a: side surface
- 31: main bearing
- 32: main-bearing cap
- 32a: one side surface
- 33: sealing material
- 34: circumferential groove

## Claims

1. A main bearing for an internal combustion engine, comprising:
a base-plate saddle provided at a center portion of a base plate in a widthwise direction, extending in a horizontal direction perpendicular to a longitudinal direction of the base plate such that a plate thickness thereof increases in the longitudinal direction of the base plate;
a main-bearing bottom metal member that is mounted at a bottom-portion inner circumferential surface of the base-plate saddle and that supports a bottom half of a bearing surface of a crank shaft;
a main-bearing cap disposed so as to cover the bottom portion of the base-plate saddle from above; and
a main-bearing top metal member that is mounted at an inner circumferential surface of the main-bearing cap and that supports a top half of the bearing surface,
in which a first oil channel that passes through the main-bearing cap in a plate-thickness direction is provided in a straight line in a widthwise direction of the base plate; a second oil channel that is communicated with this first oil channel and that also passes through the base-plate saddle in the plate-thickness direction is provided in a straight line in the widthwise direction of the base plate; and an inlet portion of this second oil channel is connected to one end of a lubricant branch pipe that supplies lubricant to an oil groove provided in the main-bearing top metal member via the first oil channel and the second oil channel;
wherein a central axis of the first oil channel and a central axis of the second oil channel intersect at 0 degree to 45 degrees;
a central axis at one end of the lubricant branch pipe and a central axis of the lubricant branch pipe excluding the one end intersect at 0 degree to 45 degrees; and
the lubricant branch pipe, excluding the one end thereof, extends in a straight line in the widthwise direction of the base plate.

2. A main bearing for an internal combustion engine according to Claim 1, wherein the lubricant branch pipe is arranged so as not to enter a plane formed by a trajectory of a side surface of a crank arm of the crank shaft disposed adjacent thereto.

3. A main bearing for an internal combustion engine according to Claim 1 or 2, wherein a circumferential groove that receives a sealing material, which is arranged so as to surround an inlet of the first oil channel, is provided at one side surface of the main-bearing cap.

4. An internal combustion engine equipped with a main bearing for an internal combustion engine according to any one of Claims 1 to 3.
